# EUROPEAN PATENT APPLICATION

(11) **EP 4 787 542 A1**
(43) Date of publication of application: **05.08.2026**
(21) Application number: 24870095.7
(22) Date of filing: 02.08.2024
(51) Int. Cl.: H01M 10/613, H01M 10/659, H01M 10/6556, H01M 50/35

(54) **HEAT ABSORPTION DEVICE, BATTERY PACK AND ELECTRIC DEVICE**

(30) Priority: 28.09.2023 CN 202311283562
(71) Applicant: BYD Company Limited, Shenzhen, Guangdong 518118 (CN)
(72) Inventor: HAN, Guiyue, Shenzhen, Guangdong 518118 (CN); LEI, Song, Shenzhen, Guangdong 518118 (CN); GUO, Jinxin, Shenzhen, Guangdong 518118 (CN); LIU, Mingshuo, Shenzhen, Guangdong 518118 (CN); LI, Yi, Shenzhen, Guangdong 518118 (CN)
(74) Representative: Taor, Simon Edward William
(86) International application number: PCT/CN2024/109481
(87) International publication number: WO 2025/066546

(57) **Abstract**

A vehicle, comprising a battery pack. The battery pack is provided with a heat absorption device. The heat absorption device comprises an accommodating member. The accommodating member comprises an inner sealing portion and an outer sealing portion. The inner sealing portion is configured to be annular, thus defining a sealed cavity for accommodating a heat absorption material capable of vaporizing and absorbing heat. The outer sealing portion is arranged outside of the inner sealing portion; the outer sealing portion and the inner sealing portion are spaced apart thus creating an exhaust channel, the exhaust channel having an exhaust port capable of communicating with the outside.

## Description

### CROSS-REFERENCE TO RELATED APPLICATIONS

The present disclosure claims priority to Chinese Patent Application No. 202311283562.7 filed with the China National Intellectual Property Administration on September 28, 2023, titled "HEAT ABSORPTION DEVICE, BATTERY PACK AND ELECTRIC DEVICE", which is incorporated herein by reference in its entirety.

### FIELD

The present disclosure relates to the field of battery technology, and more particularly to a heat absorption device, a battery pack and an electric device.

### BACKGROUND

Batteries generate heat during operation. Excessive temperatures can cause problems such as battery capacity decay and reduced cycle life, and can even cause thermal runaway. Batteries generate a lot of heat during charging and discharging. Excessive temperatures limit the charging speed and range. Existing heat absorption devices may generate gas after absorbing heat, and the gas cannot be discharged in a directional manner.

Therefore, it is necessary to provide a heat absorption device, a battery pack and an electric device to at least partially solve the above problems.

### SUMMARY

A series of simplified concepts are introduced in the Summary of the Invention section, which will be further described in detail in the Detailed Description of the Invention section. The Summary of the Invention section of this application does not mean to attempt to define the key features and essential technical features of the claimed technical solution, nor does it mean to attempt to determine the scope of protection of the claimed technical solution.

To at least partially solve the above-mentioned problems, the present application provides a heat absorption device in a first aspect, including an accommodating member, wherein the accommodating member includes:
an inner sealing portion, the inner sealing portion is configured to be annular to define a sealed cavity accommodating a heat absorption material; and
an outer sealing portion, the outer sealing portion is disposed on the outer side of the inner sealing portion, and the outer sealing portion is spaced apart from the inner sealing portion to form an exhaust channel, and the exhaust channel has an exhaust port in communication with an outside environment.

Optionally, the exhaust port is arranged with a one-way ventilation membrane, and the one-way ventilation membrane covers the exhaust port.

Optionally, the inner sealing portion includes a first inner sealing portion and a second inner sealing portion connected end-to-end to form an annular structure, and the sealing strength of the first inner sealing portion is higher than the sealing strength of the second inner sealing portion.

Optionally, a plurality of the second inner sealing portions are arranged.

Optionally, a width of the first inner sealing portion is greater than a width of the second inner sealing portion, such that the inner sealing portion is formed with a recess.

Optionally, the recess is oriented toward the sealed cavity.

Optionally, a ratio of a width of the first inner sealing portion to a width of the second inner sealing portion is in a range of 3:1 to 2:1.

Optionally, a plurality of the inner sealing portions are arranged, and the plurality of inner sealing portions are arranged along a first direction and disposed on an inner circumferential side of the outer sealing portion;
and the second inner sealing portion is located in a region where the inner sealing portion extends along the first direction.

Optionally, the outer sealing portion includes a first outer sealing portion extending along a first direction, and a second outer sealing portion extending along a second direction, and the first direction is perpendicular to the second direction; wherein,
the exhaust port is arranged at the second outer sealing portion.

Optionally, a ratio of a dimension of the sealed cavity along a first direction to a dimension along a second direction is in a range of 1:1 to 2:1.

Optionally, the heat absorption material is coated within the sealed cavity of the accommodating member.

Optionally, the accommodating member is formed by packaging films arranged at intervals along the thickness direction.

Optionally, the packaging films are made of a high-temperature resistant thermoplastic material.

Optionally, a ratio of a width of the exhaust channel to a dimension of the inner sealing portion along a second direction is in a range of 1:100 to 1:50.

A second aspect of the present application provides a battery pack, including a battery cell and the above-mentioned heat absorption device; and the heat absorption device is in contact with the battery cell.

Optionally, the exhaust port and an explosion-proof valve of the battery cell are oriented in the same direction.

A third aspect of the present application provides an electric device, including the above-mentioned battery pack.

### BRIEF DESCRIPTION OF THE DRAWINGS

The following drawings of the embodiments of the present application are hereby used as part of the present application for understanding the present application. The drawings show the embodiments of the present application and their descriptions, and are used to explain the principles of the present application. In the drawings,
FIG. 1 is a front cross-sectional view of a heat absorption device according to a preferred embodiment of the present application;
FIG. 2 is an enlarged schematic diagram of part A in FIG. 1;
FIG. 3 is a top cross-sectional view of a heat absorption device according to a preferred embodiment of the present application;
FIG. 4 is an enlarged schematic diagram of part B in FIG. 3;
FIG. 5 is a perspective exploded view of a heat absorption device according to a preferred embodiment of the present application;
FIG. 6 is a schematic diagram of a heat absorption device and a battery cell according to a preferred embodiment of the present application;
FIG. 7 is a schematic diagram of a heat absorption device according to an embodiment of the present application;
FIG. 8 is a schematic diagram of a heat absorption device according to an embodiment of the present application;
FIG. 9 is a schematic diagram of a heat absorption device according to an embodiment of the present application;
FIG. 10 is a schematic diagram of a heat absorption device according to an embodiment of the present application;
FIG. 11 is a schematic diagram of a heat absorption device according to an embodiment of the present application; and
FIG. 12 is a schematic diagram of a heat absorption device according to an embodiment of the present application.

Reference signs:
100:Heat absorption device
110:Accommodating member
110A:Packaging film
120:Inner sealing portion
121:First inner sealing portion
122:Second inner sealing portion
123:Recess
130:Outer sealing portion
131:First outer sealing portion
132:Second outer sealing portion
140:Exhaust port
141:One-way ventilation membrane
200:Heat absorption material
210:Sealed cavity
300:Exhaust channel
800:Battery cell
810:Explosion-proof valve
D1:First direction
D2:Second direction
DW:Thickness direction

### DETAILED DESCRIPTION

In the following description, a large number of specific details are provided to provide a more thorough understanding of the present application. However, it will be apparent to those skilled in the art that the present application embodiments can be implemented without one or more of these details. In other examples, some technical features well known in the art are not described to avoid confusion with the present application embodiments.

Herein, ordinal numbers such as "first" and "second" cited in this application are merely identifiers and do not have any other meanings, such as a specific order, etc. Moreover, for example, the term "first component" itself does not imply the existence of a "second component", and the term "second component" itself does not imply the existence of a "first component".

In this document, "upper", "lower", "front", "back", "left", "right", etc. are only used to indicate the relative position relationship between related parts, rather than to limit the absolute positions of these related parts.

In this document, "equal", "same", etc. are not strictly limited in a mathematical and/or geometric sense, but also include errors that can be understood by those skilled in the art and are allowed in manufacturing or use.

Unless otherwise stated, numerical ranges herein include not only the entire range between its two endpoints but also the several sub-ranges contained therein.

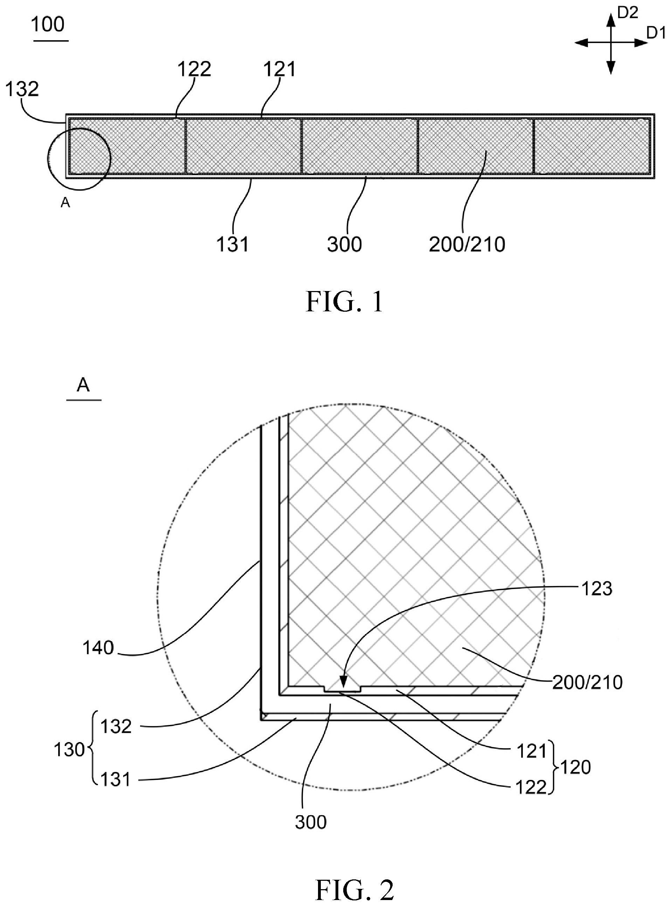

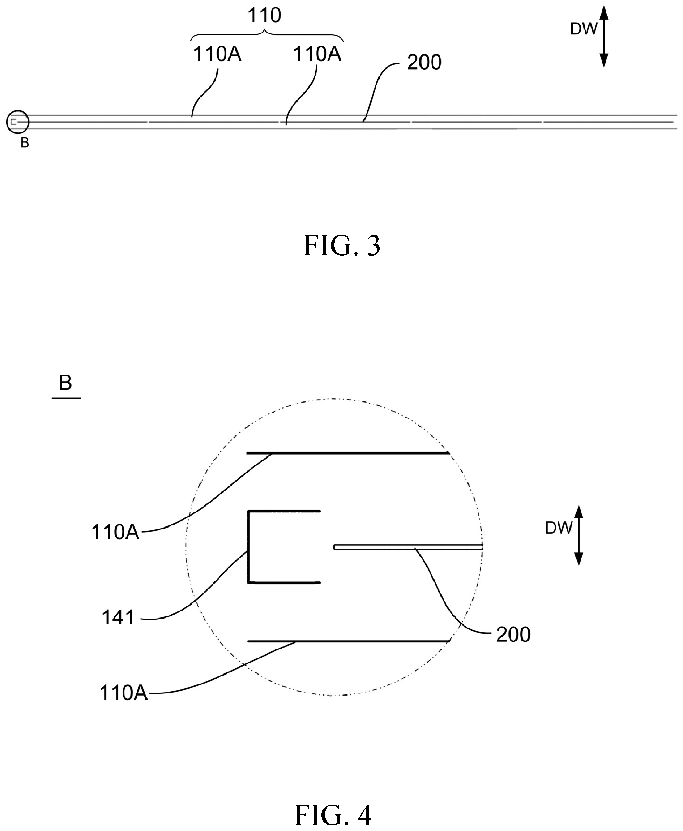

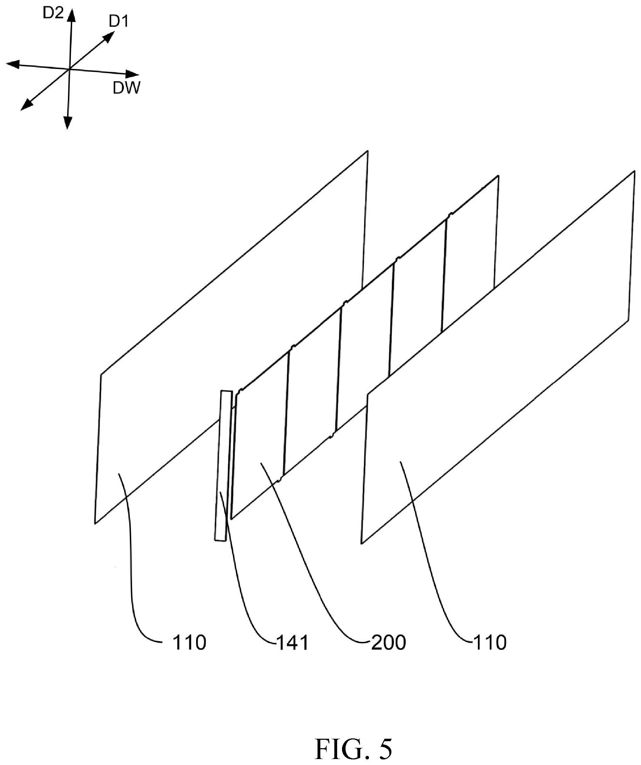

As shown in FIG. 1 to 5, an embodiment of the present application provides a heat absorption device 100, which includes an accommodating member 110, an inner sealing portion 120, an outer sealing portion 130 and a heat absorption material 200. In the present application, the accommodating member 110 is composed of two packaging films 110A arranged opposite to each other in the thickness direction DW and sealed and bonded together. The accommodating member 110 has two spaced-apart sealed portions, namely the inner sealing portion 120 and the outer sealing portion 130. That is, some parts of the two packaging films 110A are sealed and bonded together to form the inner sealing portion 120, and other parts of the packaging films 110A are sealed and bonded together to form the outer sealing portion 130. The sealing and bonding methods include, but are not limited to hot pressing, cold pressing and bonding. The sealed and bonded structures formed by these methods can be destroyed under a certain strength. For example, if one side of the seal is subjected to a pressure exceeding its designed bearing capacity, the sealed and bonded structure may be destroyed.

The inner sealing portion 120 is constructed in an annular structure to define a sealed cavity 210 containing the heat absorption material 200. The outer sealing portion 130 is disposed on the outer circumferential side of the inner sealing portion 120. The outer sealing portion 130 is spaced apart from the inner sealing portion 120 and surrounds the outer side of the inner sealing portion 120, resulting in the outer sealing portion 130 also being annular. The area between the inner and outer sealing portions 120, 130, and the packaging film 110A forms an exhaust channel 300. The exhaust channel 300 has an exhaust port 140 that can communicate with the outside. In the present application, the configuration of the inner and outer sealing portions 120, 130 allows for flexible adjustment of the size and shape of the sealed cavity 210 and the exhaust channel 300 defined thereby to accommodate different application scenarios and requirements. The sealed cavity 210 formed by the inner sealing portion 120 is capable of holding the heat absorption material 200. Under normal conditions, the heat absorption material 200 is stable within the sealed cavity 210. In the event of thermal runaway, the inner sealing portion 120 can connect the sealed cavity 210 with the exhaust channel 300 to achieve directional exhaust of gas.

The heat absorption material 200 disposed within the sealed cavity 210 absorbs heat in high-temperature environments. The heat absorption material 200 can be a phase-change material, or other materials with similar effects. Preferably, the heat absorption material 200 is a phase-change material, which can be a solid-gas phase-change material or a liquid-gas phase-change material. During normal use, the phase-change material does not undergo a phase change. However, when the temperature around the heat absorption device 100 rises, the phase-change material absorbs sufficient heat and undergoes a phase change, changing from solid to gas or from liquid to gas.

The exhaust port 140 is provided with a one-way ventilation membrane 141. The one-way ventilation membrane 141 only allows gas to pass through in one direction under a certain pressure difference, preventing gas backflow. In this application, the exhaust port 140 is provided as one or more. Multiple exhaust ports 140 are provided on the same plane.

Optionally, the one-way ventilation membrane 141 is a polyester film, a fluoroplastic film, a polypropylene film, a silicone rubber film, or a polymer composite film. Examples of polyester films include polyester film or polyvinyl ketone film. Fluoroplastic films include polytetrafluoroethylene films. Polymer composite films include polyester and polyimide composite films. Preferably, the one-way ventilation membrane 141 is polytetrafluoroethylene film, which is waterproof, breathable, and temperature-resistant up to 250°C.

Optionally, the packaging film 110A is made of a high-temperature-resistant thermoplastic material. For example, the packaging film 110A is one of polytetrafluoroethylene film, polyimide film, polyetheretherketone film, and polyphenylene sulfide film. Preferably, the packaging film 110A is made of polyimide film, which has a temperature resistance of up to 260-280°C. The provision of the packaging film 110A reduces the footprint while providing good thermal conductivity. The packaging film 110A can also be customized by cutting or folding it to meet the specific requirements of the heat absorption device 100.

Optionally, the heat absorption material 200 is a phase change material. For example, the heat absorption material 200 is one of paraffin, hydrogel, metal, fatty acid, and crystalline hydrate. Preferably, the heat absorption material 200 is a hydrogel, and the large amount of heat generated during the thermal runaway process is used as the latent heat of the hydrogel's phase change.

The one-way ventilation membrane 141 is sealed and fitted with the two packaging films 110A respectively to cover the exhaust port 140. As a part of the outer sealing portion 130, the one-way ventilation membrane 141 allows the gas in the exhaust channel 300 to be discharged in a direction through the one-way ventilation membrane 141 under a certain pressure. The one-way ventilation membrane 141 has a one-way air permeability, which allows gas to pass through in one direction under a certain pressure difference, while effectively preventing gas backflow. In this way, rapid exhaust can be achieved and excessive pressure inside the system can be avoided. By adjusting the design parameters of the one-way ventilation membrane 141, control of gas emissions can be achieved, thereby achieving precise control of system operation. The methods of sealing and fitting the one-way ventilation membrane 141 and the packaging films 110A include but are not limited to hot pressing, cold pressing and bonding. Specifically, the one-way ventilation membrane 141 covers the exhaust port 140 by attaching the one-way ventilation membrane 141 to the circumferential side (inner wall or outer wall) of the exhaust port 140 so that the gas in the heat absorption device 100 can only pass through the one-way ventilation membrane 141.

The inner sealing portion 120 includes a first inner sealing portion 121 and a second inner sealing portion 122 connected end to end to form an annular structure. The sealing strength of the first inner sealing portion 121 is higher than the sealing strength of the second inner sealing portion 122. When the air pressure in the sealed cavity 210 exceeds the pressure bearing capacity of the second inner sealing portion 122, the sealing structure of the second inner sealing portion 122 is destroyed, and gas escapes from the sealed cavity 210. The sealing strength of the first inner sealing portion 121 is lower than or equal to the sealing strength of the outer sealing portion 130. At the same time, in the present application, in order to ensure the pressure range that the heat absorption device 100 can withstand and ensure safe use, the overall sealing strength of the inner sealing portion 120 is lower than the sealing strength of the outer sealing portion 130. When the temperature around heat absorption device 100 rises, heat absorption material 200 rapidly absorbs heat and generates gas, increasing the pressure within sealed cavity 210. When the pressure within sealed cavity 210 exceeds the bearing capacity of the area with less sealing strength, the sealing structure in the area with less sealing strength is damaged, and the gas escapes from sealed cavity 210 into exhaust channel 300 and is then discharged through exhaust port 140, achieving efficient heat absorption. The arrangement of exhaust channel 300 and exhaust port 140 allows for targeted gas discharge, effectively reducing temperature and internal pressure and preventing heat diffusion. As can be appreciated, when gas escapes from sealed cavity 210 into exhaust channel 300, the overall gas pressure decreases.

Optionally, the packaging film 110A is sealed and laminated by heat and pressure to form the inner sealing portion 120, wherein the first inner sealing portion 121 and the second inner sealing portion 122 have different sealing strengths. Different sealing strengths can be achieved in the following ways.
1. Pressure distribution method: Different pressures are applied during the hot pressing process to achieve different bonding strengths in different areas. Specifically, hot pressing equipment with adjustable pressure can be used, or spacers of varying thicknesses can be placed between the packaging film 110A and the substrate, or hot pressing can be performed in batches to control the hot pressing pressure to be different between the area where the first inner sealing portion 121 is located and the area where the second inner sealing portion 122 is located.
2. Temperature gradient method: During the hot pressing process, by adjusting the distribution of the temperature gradient, the packaging film 110A in the area where the first inner sealing portion 121 is located and the packaging film 110A in the area where the second inner sealing portion 122 is located can reach different degrees of softening, thereby forming different bonding strengths. Specifically, a hot pressing device with multi-temperature zone control can be used, or local heating or cooling can be used during the hot pressing process to achieve temperature gradient control. Material property differentiation method: Packaging films with different properties are selected for the first inner sealing portion 121 and the second inner sealing portion 122, such as differences in material hardness, material size or adhesion. Specifically, during the hot pressing process, different materials will correspond to different bonding strengths, forming areas with different sealing strengths.
3. Differentiated Hot Pressing Time Method: The hot pressing time can be adjusted for the packaging film 110A in the area where the first inner sealing portion 121 is located and the packaging film 110A in the area where the second inner sealing portion 122 is located, allowing them to undergo different hot pressing durations to achieve different bonding strengths. This method can achieve different sealing strengths in the areas where the first inner sealing portion 121 and the second inner sealing portion 122 are located during a single hot press or multiple hot presses.

Optionally, the width of the first inner sealing portion 121 is greater than the width of the second inner sealing portion 122, so that the inner sealing portion 120 forms a recess 123 (see FIG. 2). In the first inner sealing portion 121, the hot-pressed packaging film 110A has a large bonding area and is in a higher constrained state, thus having a better bonding effect and higher bonding strength. In the second inner sealing portion 122, the hot-pressed packaging film 110A has a smaller bonding area and a lower bonding strength. When the pressure in the sealed cavity 210 is high, the sealing structure of the second inner sealing portion 122 will be more easily destroyed. The second inner sealing portion 122 serves as a directional exhaust port of the heat absorption device 100. Under a certain pressure, it can form a channel connecting the sealed cavity 210 and the exhaust channel 300. The main purpose of the second inner sealing portion 122 is to quickly discharge the gas generated after phase change vaporization out of the heat absorption device 100, thereby reducing the internal pressure in the heat absorption device 100.

In order to make the second inner sealing portion 122 react quickly, the sealing strength of the second inner sealing portion 122 can be adjusted by adjusting parameters such as temperature, pressure or time used for hot pressing sealing, so that when 4 to 6 grams of water vapor undergoes phase change in the sealed cavity 210, the sealing of the second inner sealing portion 122 fails, forming a channel connecting the sealed cavity 210 and the exhaust channel 300, thereby playing a role of directional exhaust.

To ensure that gas is released only from the second inner sealing portion 122, the sealing strength of the first inner sealing portion 121 should be adjusted to 4 to 6 times that of the second inner sealing portion 122. Preferably, the sealing strength of the first inner sealing portion 121 is 6 times that of the second inner sealing portion 122. Preferably, the sealing width of the second inner sealing portion 122 is between 1/2 and 1/3 of the sealing width of the first inner sealing portion 121. Specifically, the width of the second inner sealing portion 122 is approximately 1-1.5 mm.

Optionally, the recess 123 faces the sealed cavity 210. The recess 123 may cause stress concentration, increase the mechanical weakness of the second inner sealing portion 122, and reduce the difficulty of opening the second inner sealing portion 122.

Optionally, multiple first inner sealing portions 121 and second inner sealing portions 122 are provided. Each of the multiple second inner sealing portions 122 is connected to the exhaust port 140 via the exhaust channel 300. When the second inner sealing portion 122 is opened, gas within the sealed cavity 210 is rapidly discharged from the heat absorption device 100 through the exhaust channel 300 and the exhaust port 140. Preferably, the second inner sealing portion 122 is provided at a non-central position of the inner sealing portion 120.

Optionally, multiple inner sealing portions 120 are provided, arranged along a first direction D1 (for example, the length of the heat absorption device 100) and disposed on the inner circumference side of the outer sealing portion 130. The provision of multiple inner sealing portions 120 allows the phase change material within the sealed cavity 210 to be sealed in zones along the first direction D1, preventing displacement of the phase change material due to squeezing or disordered movement of gas that has not been exhausted from the sealed structure. Heat-absorbing phase change material is present in all zones as much as possible, while also ensuring the independence of each sealed cavity 210. It should be noted that the number of inner sealing portions 120 should be appropriate. Too few zones of phase change material will not effectively suppress phase change material displacement; too many zones of phase change material will reduce the amount of heat-absorbing phase change material in a single zone. At the same time, the same amount of phase change material will occupy more space, affecting the volumetric energy density of the battery pack. The second inner sealing portion 122 is positioned in the region of the inner sealing portion 120 extending along the first direction D1. Preferably, multiple second inner sealing portions 122 are centrally symmetrically disposed on both sides of the inner sealing portion 120 along the second direction D2 (for example, the second direction D2 is the width direction of the heat absorption device 100). In this application, the thickness direction DW, the first direction D1, and the second direction D2 are perpendicular to each other.

Optionally, when a plurality of inner sealing portions 120 are provided, different inner sealing portions 120 may use different heat absorption materials 200.

Optionally, the outer sealing portion 130 includes a first outer sealing portion 131 extending along the first direction D1 and a second outer sealing portion 132 extending along the second direction D2. The exhaust port 140 is provided at the second outer sealing portion 132.

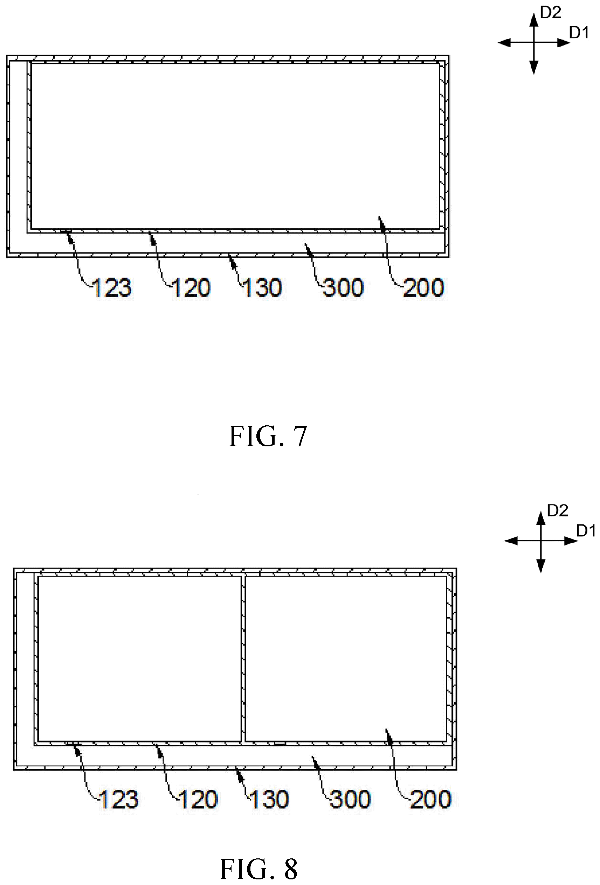

In some embodiments, as shown in FIG. 7 , a single inner sealing portion 120 is provided, and the inner sealing portion 120 is spaced apart from the outer sealing portion 130 to form an L-shaped exhaust channel 300. The exhaust channel 300 includes a first channel extending along a first direction D1 and a second channel extending along a second direction D2. The first channel is connected to the second channel. Accordingly, the outer sealing portion 130 can be shaped like an L-shape or an annular structure. The outer sealing portion 130 has at least two sides and is spaced apart from the inner sealing portion 120.

In some embodiments, as shown in FIG. 8 , a plurality of inner sealing portions 120 are provided, and outer sealing portions 130 are spaced apart from the inner sealing portions 120 to form an exhaust channel 300 similar to an L-shaped structure. The plurality of inner sealing portions 120 are arranged along a first direction D1 (i.e., the longitudinal direction of the heat absorption device 100). Correspondingly, the plurality of heat absorption material 200 are isolated by the inner sealing portions 120, thereby having better independence. The opening of one inner sealing portion 120 does not affect the sealing of other sealed cavities 210. A second channel is formed between the bottom edge of each inner sealing portion 120 and the outer sealing portion 130. The inner sealing portion 120 at the outermost end forms a first channel with the other side of the outer sealing portion 130, and the first channel is connected to the second channel to form an exhaust channel 300 similar to an L-shaped structure. Accordingly, the shape of the outer sealing portion 130 can be similar to an L-shaped structure or an annular structure. The outer sealing portion 130 has at least two sides. It can be understood that the outermost end refers to the end corresponding to the outer sealing portion 130 of the two ends along the first direction D1. Preferably, the exhaust port 140 is provided in the first channel, and the second inner sealing portion 122 is provided in the second channel.

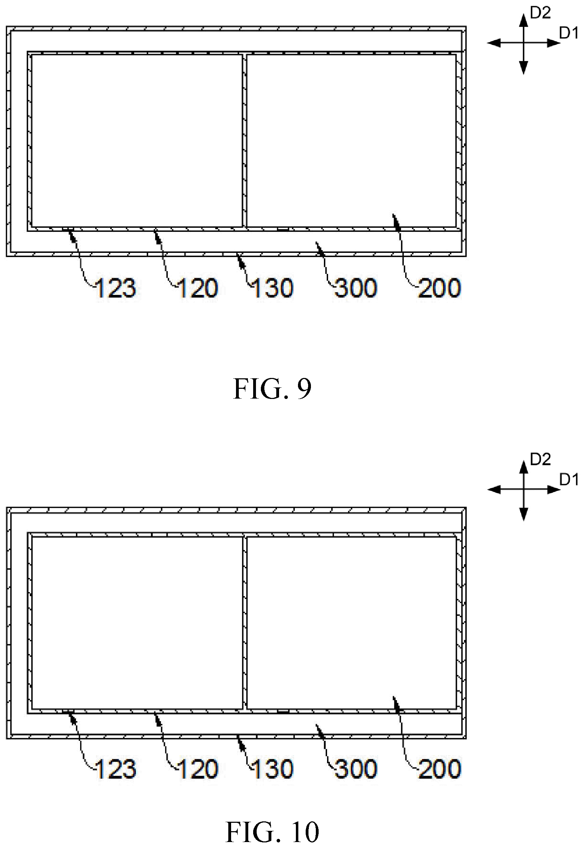

In some embodiments, as shown in FIG. 9, the inner sealing portion 120 is set as one, and the outer sealing portion 130 is spaced apart from the inner sealing portion 120 to form an exhaust channel 300 similar to a U-shaped structure. The outer sealing portion 130 includes at least three sides connected in sequence. Among them, the two opposite sides of the outer sealing portion 130 are respectively arranged on the opposite sides of the inner sealing portion 120 along the second direction D2 to form a second channel; the other side of the outer sealing portion 130 forms a first channel. The first channel is respectively connected to the second channels on both sides to form an exhaust channel 300 similar to a U-shape. Correspondingly, the shape of the outer sealing portion 130 can be a U-shaped structure or a annular structure. The outer sealing portion 130 has at least three sides.

In some embodiments, as shown in FIG. 10 , multiple inner sealing portions 120 are provided, and outer sealing portions 130 are spaced apart from the inner sealing portions 120 to form a U-shaped exhaust channel 300. Multiple inner sealing portions 120 are arranged along the length of the heat absorption device 100. Accordingly, the multiple heat absorption material 200 are isolated by the inner sealing portions 120, thereby providing greater independence. Opening one inner sealing portion 120 does not affect the sealing of other sealed cavities 210. Each inner sealing portion 120 forms a second channel between its two opposite sides along the second direction D2 and the outer sealing portion 130. The outermost inner sealing portion 120 forms a first channel with the outer sealing portion 130. The first channel communicates with the second channels on either side, forming a U-shaped exhaust channel 300. The outer sealing portion 130 can be U-shaped or annular. The outer sealing portion 130 has at least three sides. It is understood that the outermost end refers to the end corresponding to the outer sealing portion 130 of the two ends along the first direction D1. Preferably, the exhaust port 140 is provided in the first channel, and the second inner sealing portion 122 is provided in the second channel. Each inner sealing portion 120 is provided with at least two second inner sealing portions 122, which are symmetrical about the center of the inner sealing portion 120. The centrally symmetrical arrangement of the multiple second inner sealing portions 122 ensures balanced pressure relief within the sealed cavity 210, preventing excessive pressure or imbalance in certain areas.

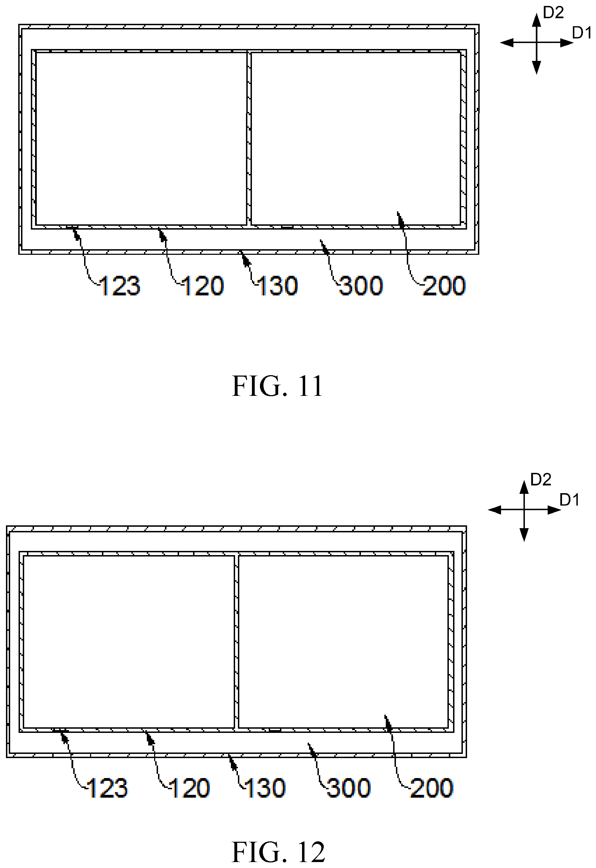

In some embodiments, as shown in FIG. 11 , a single inner sealing portion 120 is provided, and an outer sealing portion 130 is a rectangular annular structure adapted to the inner sealing portion 120. Two opposing sides of the outer sealing portion 130 are disposed on opposite sides of the inner sealing portion 120 along the second direction D2, forming a second channel. The other two opposing sides of the outer sealing portion 130 are disposed on opposite sides of the inner sealing portion 120 along the first direction D1, forming a first channel. The first channel, the second channel, the first channel, and the second channel are sequentially connected to form a rectangular annular exhaust channel 300. It will be appreciated that the two first channels are disposed opposite each other, and the two second channels are disposed opposite each other.

In some embodiments, as shown in FIG. 12, multiple inner sealing portions 120 are provided, and the outer sealing portion 130 is a rectangular annular structure that is compatible with the inner sealing portions 120. Multiple inner sealing portions 120 are arranged along the length of the heat absorption device 100. Two sides of each inner sealing portion 120 extending in the first direction D1 form a second channel with the outer sealing portion 130. The two outermost inner sealing portions 120 form a first channel with the other two opposing sides of the outer sealing portion 130. The first channel, the second channel, and the first channel and the second channel are sequentially connected to form a rectangular annular exhaust channel 300. It will be understood that the outermost ends refer to the two ends along the first direction D1. Preferably, the exhaust port 140 is provided in at least one first channel, and the second inner sealing portion 122 is provided in at least one second channel. Each inner sealing portion 120 is provided with at least two second inner sealing portions 122, which are symmetrical about the center of the inner sealing portion 120. Optionally, the inner sealing portion 120 located at the end adjacent to the first channel provided with the exhaust port 140 is provided with a second inner sealing portion 122 to enhance pressure relief efficiency. Alternatively, the inner sealing portion 120 located at the end adjacent to the first channel not provided with the exhaust port 140 is not provided with the second inner sealing portion 122.

In the present application, the ratio of the size of the sealed cavity 210 along the first direction D1 to the size along the second direction D2 is 1:1 to 2:1. When the inner sealing part 120 is provided in plurality, the size of the sealed cavity 210 of each inner sealing part 120 may be the same or different. For example, the ratio of the size of the sealed cavity 210 along the first direction D1 to the size along the second direction D2 adjacent to the middle area where the battery cell 800 has a larger amount of expansion and deformation is 1:1, and the ratio of the size of the sealed cavity 210 along the first direction D1 to the size along the second direction D2 in other areas is 2:1. Alternatively, the ratio of the size of each sealed cavity 210 along the first direction D1 to the size along the second direction D2 is the same, both 2:1.

Optionally, the heat absorption material 200 is coated on the inner side of the packaging film 110A corresponding to the sealed cavity 210 , ie, the portion of the inner side of the packaging film 110A surrounded by the inner sealing portion 120 , ie, the cavity wall of the sealed cavity 210.

The ratio of the width of the exhaust channel 300 to the dimension of the inner sealing portion 120 along the second direction D2 is 1:100 to 1:50. Optionally, the width of the exhaust channel 300 is 1.5 mm to 2.5 mm.

The heat absorption device 100 of the present application is prepared by the following method:
S1: hot pressing and sealing the two opposite sides of the one-way ventilation membrane 141 to the two packaging films 110A respectively;
S3: Coating the heat absorption material 200 in the rectangular area enclosed by the inner bonding area of each packaging film 110A;
S5: Align the inner bonding areas of the two packaging films 110A with each other, and align the outer bonding areas with each other;
S7: The two packaging films 110A are heat-pressed and sealed at the inner bonding area, and the heat-pressed portion forms an inner sealing portion 120;
S9: The two packaging films are heat-pressed and sealed at the outer bonding area, and the heat-pressed portion forms an outer sealing portion 130.

Step S2 is also included between the above steps S1 and S3. Specifically, the step S2 is as follows: fold the two packaging films 110A in half and aligning them so that the inner bonding areas and the outer bonding areas of the two packaging films 110A correspond to each other.

In the above step S3 , the heat absorption material 200 is coated on the packaging film 110A through a slit coating process.

The above step S7 includes: step S71: hot pressing and sealing the two packaging films 110A in the first inner bonding area; step S72: hot pressing and sealing the two packaging films 110A in the second inner bonding area. The order of steps S71 and S72 can be reversed.

After the one-way ventilation membrane 141 and the packaging film 110A are hot-pressed, the area of the one-way ventilation membrane 141 that is not hot-pressed serves as the exhaust port 140.

The present application also provides a battery pack comprising a battery cell 800 and the aforementioned heat absorption device 100. The heat absorption device 100 is in contact with battery cell 800. The heat absorption device 100 can rapidly absorb heat from the surrounding battery cell 800, effectively controlling the temperature of the battery cell 800 and preventing overheating, thereby improving the safety of the battery pack. When thermal runaway occurs in battery cell 800, the heat absorption device 100 can rapidly absorb excess heat from the surrounding battery cell 800, effectively reducing the temperature of the battery cell 800, preventing further deterioration of the thermal runaway condition, and protecting the surrounding environment and the safety of other components.

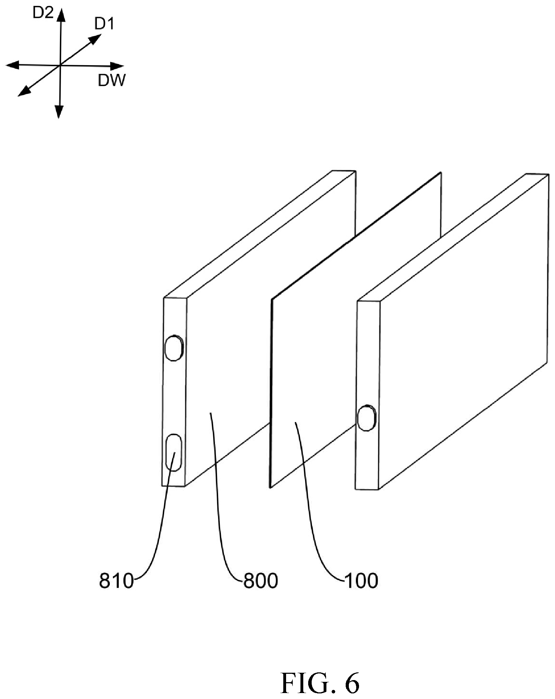

As shown in FIG. 6 , in the present application, the heat absorption device 100 is arranged between the battery cells 800. When the battery cell 800 releases a large amount of energy in a short period of time after thermal runaway, the phase change material located in the heat absorption device 100 absorbs heat and undergoes phase change to quickly cool the runaway battery cell 800, thereby reducing the temperature of the runaway battery cell 800, thereby achieving the purpose of suppressing heat diffusion of the battery pack.

The battery cells 800 are slender blade-shaped battery cells 800. In practical applications, they can also be combined with other sized battery cells 800, such as VDA-sized square-shell battery cells 800. A heat absorption device 100 is placed between every two battery cells 800. In practical applications, a heat absorption device 100 can also be placed for every two or more battery cells 800. Alternatively, the heat absorption device 100 can be densely distributed in higher-temperature areas within the same battery pack, while being sparsely distributed in lower-temperature areas.

The exhaust port 140 and the explosion-proof valve 810 of the battery cell 800 are oriented in the same direction. In the event of thermal runaway of the battery cell 800, the phase change material in the heat absorption device 100 rapidly absorbs heat and generates gas. This gas is discharged through the exhaust channel 300 to the exhaust port 140. The direction of gas discharged from the exhaust port 140 is the same as the direction of gas discharged after the explosion-proof valve 810 of the battery cell 800 is opened. The gas generated by the phase change can be smoothly discharged out of the battery pack through the exhaust channel of the entire battery pack.

This application also provides a vehicle including the aforementioned battery pack. The heat absorption device 100 can promptly absorb excess heat generated by the battery pack and dissipate it, preventing battery overheating and reducing the risk of fire and explosion. This helps improve the overall safety of the vehicle and reduces the risk of injury to the driver and passengers. Maintaining a suitable temperature can improve the charging and discharging efficiency of the vehicle's batteries. The use of the heat absorption device 100 can effectively dissipate excess heat in the battery pack, improving energy conversion efficiency and thereby extending the battery's range.

Unless otherwise defined, the technical and scientific terms used herein have the same meaning as commonly understood by those skilled in the art in the technical field of this application. The terms used herein are only for describing specific implementation purposes and are not intended to limit this application. Terms such as "setting" appearing in this document can mean that one component is directly attached to another component, or that one component is attached to another component through an intermediate component. Features described in this document in one embodiment may be applied to another embodiment alone or in combination with other features, unless the feature is not applicable in the other embodiment or otherwise specified.

The present application has been described through the above embodiments, but it should be understood that the above embodiments are for illustrative and illustrative purposes only and are not intended to limit the present application to the described embodiments. Those skilled in the art will appreciate that many more variations and modifications may be made based on the teachings of this application, and all of these variations and modifications fall within the scope of protection claimed in this application.

## Claims

1. A heat absorption device (100), comprising an accommodating member (110), the accommodating member (110) comprising:
an inner sealing portion (120), the inner sealing portion (120) being configured to be annular to define a sealed cavity (210) accommodating a heat absorption material (200) capable of vaporizing to absorb heat; and
an outer sealing portion (130), the outer sealing portion (130) being disposed on the outer side of the inner sealing portion (120), and the outer sealing portion (130) being spaced apart from the inner sealing portion (120) to form an exhaust channel (300), and the exhaust channel (300) having an exhaust port (140) in communication with an outside environment.

2. The heat absorption device (100) according to claim 1, wherein the exhaust port (140) is arranged with a one-way ventilation membrane (141), and the one-way ventilation membrane (141) covers the exhaust port (140).

3. The heat absorption device (100) according to claim 1 or 2, wherein the inner sealing portion (120) comprises a first inner sealing portion (121) and a second inner sealing portion (122) connected end-to-end to form an annular structure, and the sealing strength of the first inner sealing portion (121) is higher than the sealing strength of the second inner sealing portion (122).

4. The heat absorption device (100) according to claim 3, wherein a width of the first inner sealing portion (121) is greater than a width of the second inner sealing portion (122), such that the inner sealing portion (120) is formed with a recess (123).

5. The heat absorption device (100) according to claim 4, wherein the recess (123) is oriented toward the sealed cavity (210).

6. The heat absorption device (100) according to any one of claims 3 to 5, wherein a ratio of a width of the first inner sealing portion (121) to a width of the second inner sealing portion (122) is in a range of 3:1 to 2:1.

7. The heat absorption device (100) according to any one of claims 3 to 6, wherein a plurality of the second inner sealing portions (122) are arranged; and/or
wherein a plurality of the inner sealing portions (120) are arranged, and the plurality of inner sealing portions (120) are arranged along a first direction (D1) and disposed on an inner circumferential side of the outer sealing portion (130), and the second inner sealing portion (122) is located in a region where the inner sealing portion (120) extends along the first direction (D1).

8. The heat absorption device (100) according to any one of claims 1 to 7, wherein the outer sealing portion (130) comprises a first outer sealing portion (131) extending along a first direction (D1), and a second outer sealing portion (132) extending along a second direction (D2), the first direction (D1) being perpendicular to the second direction (D2);
and the exhaust port (140) is arranged at the second outer sealing portion (132).

9. The heat absorption device (100) according to any one of claims 1 to 8, wherein a ratio of a dimension of the sealed cavity (210) along a first direction (D1) to a dimension of the sealed cavity (210) along a second direction (D2) is in a range of 1:1 to 2:1.

10. The heat absorption device (100) according to any one of claims 1 to 9, wherein the heat absorption material (200) is coated on an inner wall of the sealed cavity (210).

11. The heat absorption device (100) according to any one of claims 1 to 10, wherein the accommodating member (110) is formed by two packaging films arranged opposite to each other along a thickness direction (DW), and preferably, the packaging films are made of a high-temperature resistant thermoplastic material.

12. The heat absorption device (100) according to any one of claims 1 to 11, wherein a ratio of a width of the exhaust channel (300) to a dimension of the inner sealing portion (120) along a second direction (D2) is in a range of 1:100 to 1:50.

13. A battery pack, comprising:
a battery cell (800); and
the heat absorption device (100) according to any one of claims 1 to 12;
wherein the heat absorption device (100) is in contact with the battery cell (800).

14. The battery pack according to claim 13, wherein the exhaust port (140) and an explosion-proof valve (810) of the battery cell (800) are oriented in the same direction.

15. An electric device comprising the battery pack according to claim 13 or 14.
